# EUROPEAN PATENT APPLICATION

(11) **EP 0 986 013 A2**
(43) Date of publication of application: **15.03.2000**
(21) Application number: 99117437.6
(22) Date of filing: 08.09.1999
(51) Int. Cl.: G06F 17/30

(54) **Information retrieval system**

(30) Priority: 10.09.1998 JP 25636598
(71) Applicant: Pioneer Corporation, Meguro-ku, Tokyo (JP)
(72) Inventor: Koga, Koji, Tokyo (JP); Hatano, Ichiro, Tokyo (JP)
(74) Representative: Klingseisen, Franz, Dipl.-Ing.

(57) **Abstract**

An information retrieval system which enables an information search through simple manipulations. The information retrieval system comprises an information providing server which preserves a plurality of item words each represented in Kana notation code, and information data associated with each of the item words, and an information search terminal. The information retrieval system, responsive to a search keyword entered from the information search terminal in the form of Kana notation code, searches the contents preserved in the information providing server for item words having the same Kana notation code as the entered search keyword, and information data associated with the item words, respectively.

## Description

### BACKGROUND OF THE INVENTION

### 1. Field of the Invention

The present invention relates to an information retrieval system for retrieving desired information from an information data server connected to a network.

### 2. Description of Related Art

Currently, information retrieval systems have been established for retrieving desired information, making use of the Internet or the like. With the use of such an information retrieval system, most recent information can always be searched for even from a personal computer (hereinafter referred to as the "PC") for example, that installed at home.

For conducting this search, a user first enters a search keyword related to information the user desires to search for through a keyboard provided with a PC or through an audio input with a microphone, or the like. During such an entry operation, the user may perform a conversion from a word written in the Japanese phonetic representation called "Kana" or written in Roman letters into corresponding Chinese characters (Kanji) to select a Chinese character(s) intended by himself from a possible plurality of homonyms.

Since such a conventional information retrieval system involves the Kana-to-Kanji conversion in the entry of a search keyword, it presents a poor operability particularly for use in a car.

### OBJECT AND SUMMARY OF THE INVENTION

The present invention has been made in order to solve the problem as mentioned above, and its object is to provide an information retrieval system which enables a search for desired information data through simple manipulations.

The present invention provides an information retrieval system comprising an information network, an information providing server connected to the information network for storing a plurality of item words and information data associated with each of the item words, and an information search terminal connected to the information network, wherein each of the item words includes a Kana notation code, and the information retrieval system, responsive to a search keyword entered from the information search terminal in the form of the Kana notation code, searches the contents preserved in the information providing server for the item words having the same Kana notation code as the search keyword, and the information data associated with the item words, respectively.

### BRIEF DESCRIPTION OF THE DRAWINGS

Fig. 1 is a block diagram illustrating the general configuration of an information retrieval system according to the present invention;
Fig. 2 is a table showing a portion of information on movie theaters extracted from a variety of map information data stored in a map information data server 11;
Fig. 3 is a table showing listed data related to information on movie theaters stored in a listed data providing server 12;
Fig. 4 is a block diagram illustrating the internal configuration of a mobile terminal 9;
Fig. 5 is a flow chart illustrating an information search subroutine for use in the information retrieval system of the present invention; and
Fig. 6 is a flow chart illustrating another example of the information search subroutine.

### DETAILED DESCRIPTION OF THE PREFERRED EMBODIMENTS

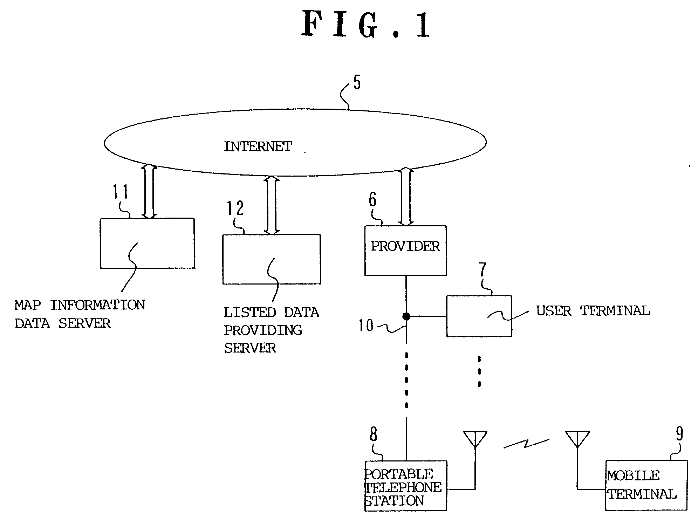

Fig. 1 illustrates the general configuration of an information retrieval system according to the present invention.

Referring specifically to Fig. 1, a map information data server 11 stores a variety of map information data including map information over the entire country; information on amusement facilities such as movie theaters; information on accommodations having vacant rooms; information on parking lots having vacant spaces; information on event sites; local whether forecasting; and so on. The information is preserved in the form of two-byte Kanji notation codes. The variety of map information data is supplied to a large number of user terminals 7 and portable telephone stations 8 connected to a telephone line 10 through the Internet 5 and a provider 6.

A listed data providing server 12 once fetches the variety of map information data preserved in the map information data server 11, and builds listed data for listing item words which should be items of a search keyword from the fetched data. In the listed data, the item words have been converted to one-byte Kana notation codes.

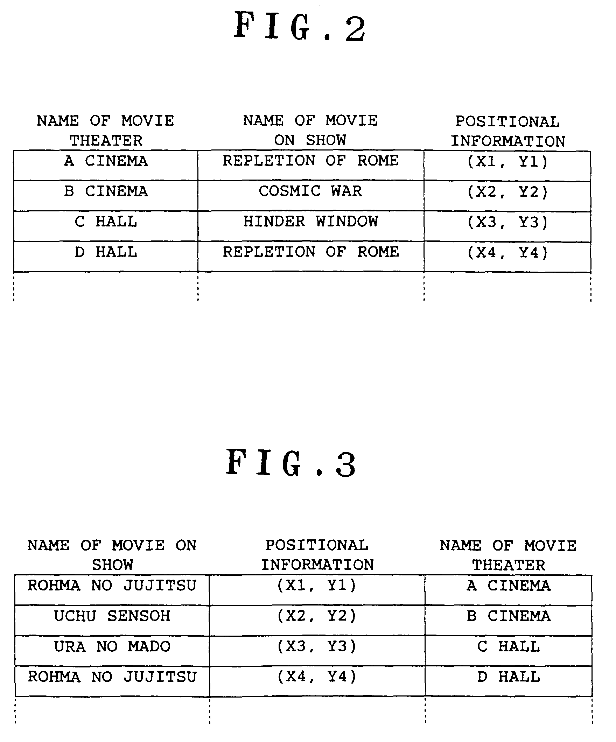

Fig. 2 shows a portion of information on movie theaters extracted from the variety of map information data preserved in the map information data server 11.

Fig. 3 shows listed data related to information on movie theaters which is created by processing the information on movie theaters of Fig. 2 in the listed data providing server 12.

As shown in Fig. 3, the listed data providing server 12 preserves, in the form of listed data, the name of movies represented by one-byte Kana notation codes which have been converted from the correspondents preserved as two-byte Kanji notation codes in the map information data server 11. In the listed data providing server 12, the names of moves serve as item words.

The listed data from the listed data providing server 12 is supplied to a large number of user terminals 7 and portable telephone stations 8 connected to the telephone line 10 through the Internet 5 and the provider 6.

A user terminal 7 may comprise, for example, a personal computer or the like, and has communication abilities for information search as follows. Specifically, the user terminal 7 receives listed data transmitted from the listed data providing server 12 and a variety of map information data transmitted from the map information data server 11, and transmits a variety of search instructions, issued by the user through manipulations on the user terminal 7, to the map information data server 11 or to the listed data providing server 12 through the telephone line 10, the provider 6 and the Internet 5. A portable telephone station 8 wirelessly transmits the listed data and variety of map information data supplied thereto through the telephone line 10 to a mobile terminal 9 equipped in a mobile vehicle such as an automobile.

The mobile terminal 9 may be an information search terminal having a navigation function for detecting its current position. For performing an information search operation, the mobile terminal 9 performs communication operations for information search as follows. Specifically, the mobile terminal 9 receives the listed data and the map information data wirelessly transmitted thereto from the portable telephone station 8, and wirelessly transmits a variety of search instructions issued by the user through manipulations on the mobile terminal 9 to the portable telephone station 8. The portable telephone station 8 transmits such search instructions to the map information data server 11 or to the listed data providing server 12 through the telephone line 10, the provider 6 and the Internet 5.

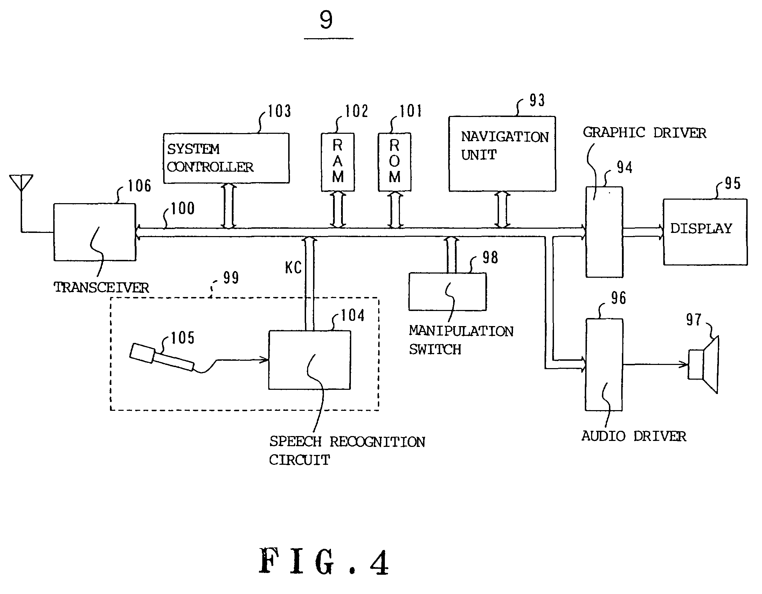

Fig. 4 is a block diagram illustrating the internal configuration of the mobile terminal 9 as described above.

Referring specifically to Fig. 4, a navigation unit 93 is provided with a variety of sensors (not shown) for sensing a current running orientation, angular velocity, and running distance of a vehicle equipped therewith, and GPS (Global Positioning System) (also not shown) for detecting an absolute location (longitude and latitude information) of the vehicle making use of radio waves sent from positioning artificial satellites. The navigation unit 93 finds a current position of the vehicle based on information on detection from these detecting means, and sends onto a system bus 100 current running map data which includes a map of a predetermined region including the current position and a point drawn thereon for indicating the current position. A graphic driver 94 converts the current running map data to image data which is supplied to a display 95. Thus, an image produced by the current running map data is displayed on the screen of the display 95. Also, the navigation unit 93 sends onto the system bus 100 a variety of audio data for generating a speech indicating a current running situation, and right turn or left turn at a branch such as an intersection. An audio driver 96 transduces such audio data to an analog audio signal which is acoustically output through a speaker 97.

A manipulation switch 98 sends a variety of manipulation instruction signals in accordance with the user's manipulations thereon to the system bus 100.

A speech input unit 99 is composed of a microphone 105 and a speech recognition circuit 104. The microphone 105 transduces the use's speech to an electrical signal which is supplied to the speech recognition circuit 104. When the speech signal coincides with a waveform corresponding to a desired manipulation instruction, the speech recognition circuit 104 sends a manipulation instruction signal corresponding to the manipulation instruction onto the system bus 100. Conversely, if the speech signal does not coincide with the waveform corresponding to the desired manipulation instruction, the speech recognition circuit 104 converts the speech signal to a Kana notation code corresponding to the utterance of the speech signal, and sends this as a Kana notation code KC onto the system bus 100. The navigation unit 93 performs operations in response to a variety of manipulation instruction signals sent onto the system bus 100 by the manipulation switch 98 or the speech input unit 99.

The system bus 100 is connected to a transceiver 106 for receiving radio waves wirelessly transmitted from the portable telephone station 8 to demodulate the aforementioned listed data or map information data, and for modulating a variety of instruction signals supplied thereto through the system bus 100 to wirelessly transmit the modulated instruction signals.

In addition, the system bus 100 is connected to ROM (Read Only Memory) 101, RAM (Random Access Memory) 102, and a system controller 103, which cooperatively perform a variety of control operations for the navigation unit 93 as well as a control for implementing an information search (later described) according to the present invention.

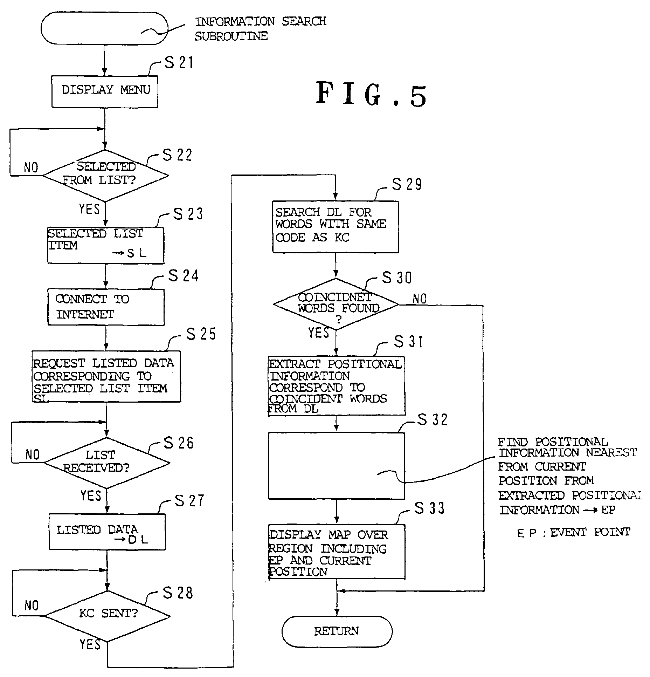

In the following, operations involved in the information search according to the present invention will be described with reference to Fig. 5.

Fig. 5 illustrates an information search subroutine executed by the system controller 103 in accordance with software stored in the ROM 101. Specifically, the system controller 103 first supplies search menu screen information to the graphic driver 94 through the system bus 100 for displaying a search menu including a list of items classified in accordance with the type of information such as movie theaters, amusement parks, restaurants, or local weather forecast (step S21). With the execution of step S21, the search menu is displayed on the screen of the display 95.

Next, the system controller 103 determines whether or not the user has selected an item from the list using the manipulation switch 98 or the speech input unit 99 (step S22). This determination is repeated until the user has selected an item from the list. When the user selects a desired item from the list on the displayed search menu using the manipulation switch 98 or the speech input unit 99, the system controller 103 once stores a selected list item SL indicative of the item thus selected from the list on the search menu in the RAM 102 (step S23).

Next, the system controller 103 supplies a connection instruction signal and a telephone number of the provider 6 to the transceiver 106 through the system bus 100 for connecting the Internet (step S24). With the execution of step S24, the transceiver 106 wirelessly places a call to the provider 6, i.e., the destination of the telephone number, to make a request for connection to the Internet. When a connection to the Internet is established, the system controller 103 supplies URL (Uniform Resource Locator) of the listed data providing server 12, and the selected list item SL to the transceiver 106 through the system bus 100 for acquiring listed data indicated by the selected list item SL (step S25). With the execution of step S25, the provider 6 accesses the listed data providing server 12. In this event, the listed data providing server 12 transmits listed data corresponding to the selected list item SL to the mobile terminal 9 through the provider 6 and the portable telephone station 8. For example, the selected list item SL indicates movie theaters, the listed data providing server 12 transmits listed data as shown in Fig. 3. Meanwhile, the system controller 103 determines whether or not the transceiver 106 has received the listed data corresponding to the selected list item SL (step S26). This determination is repeated until the transceiver 106 has received the listed data. Upon confirming the reception of the listed data at step S26, the system controller 103 stores the received listed data in the RAM 102 as listed data DL (step S27).

Next, the system controller 103 determines whether or not a Kana notation code KC has been sent from the speech input unit 99 (step S28). This determination is repeated until this Kana notation code KC has been sent.

When the user enters a search keyword through a speech using the microphone 105, the speech recognition circuit 104 sends a Kana notation code KC corresponding to the speech. For example, if the user utters "rohma no jujitsu" (the sound of a word including Chinese charcters that means "repletion of Rome") toward the microphone 105 for entering a search keyword through a speech, the speech recognition circuit 104 sends a Kana notation code KC corresponding to "rohma no jujitsu" (repletion of Rome) onto the system bus 100.

Upon determining that the Kana notation code KC as mentioned has been sent onto the system bus 100, the system controller 103 searches the listed data DL stored in the RAM 102 at step S27 for item words having the same Kana notation code as this Kana notation code KC (step S29), and determines whether or not coincident item words exist (step S30). When determining at step S30 that coincident item words exist, the system controller 103 retrieves all item words having the same Kana notation code as the Kana notation code KC from the listed data DL, and extracts all positional information associated with the respective item words (step S31). For example, since the listed data shown in Fig. 3 includes two item words having the same code as the Kana notation code KC "rohma no jujitsu," the system controller 103 extracts (X1, Y1) and (X4, Y4) as the positional information associated with the respective item words.

Next, the system controller 103 finds the nearest one from the current position of the vehicle from all the positional information thus extracted at step S31, and stores this position as an event point EP in the RAM 102 (step S32). Next, the system controller 103 supplies a drawing instruction to the navigation unit 93 for displaying an image of a map over a predetermined region including the event point EP, on which blinking is effected at the event point E (step S33).

With the execution of the step S33, the navigation unit 93 sends current running map data to the system bus 100 for displaying the map over the predetermined region including the event point EP on which a point indicative of the current position of the vehicle is drawn. The graphic driver 94 converts the current running map data to image data which is supplied to the display 95. In this way, the display 95 displays on the screen an image of the map over the predetermined region which includes blinking indications of the current position of the vehicle and the position of the movie theater existing nearest from the current position that is now showing, for example, the movie "Repletion of Rome."

After the completion of the foregoing step S33, or if it is determined at the aforementioned step S30 that no item words having the same code as the Kana notation code KC exist in the listed data DL, the system controller 103 exits this subroutine to return to the execution of a main routine (not described herein).

According to the operations illustrated in Fig. 5, the user is required to only utter the name of a movie he desires to enjoy to complete the entry of a search keyword without involving a Kana-to-Kanji conversion operation, resulting in displaying a blinking point indicative of the position of a movie theater which is now showing the movie the user desires to enjoy, particularly, the position of the movie theater nearest from the currently running position on the displayed map.

As described above, according to the information retrieval system shown in Figs. 1, 4 and 5, the listed data which lists previously converted Kana notation codes corresponding to words which may be used for search in a variety of information data, as shown in Fig. 3, has previously been built on the information providing server.

Accordingly, since the entry of a search keyword can be performed only with a Kana notation code, which eliminates the Kana-to-Kanji conversion, on the information search terminal, the operability is improved in proportion to the eliminated Kana-to-Kanji conversion operation.

In the foregoing embodiment, from all positional information extracted at step S31, the nearest one from the current position of the vehicle only is displayed in blinking fashion on the map. Alternatively, a region including the second nearest one may be displayed through manipulations on the manipulation switch 98.

Also, while Fig. 3 shows information on movie theaters as an example of the listed data, the listed data is not limited to such information on movie theaters.

For example, when the user selects weather forecast as the selected item from the list and subsequently utters the name of a desired region as a search keyword for weather forecast, the listed data providing server 12 responsively transmits weather forecast for one day in the region as listed data which is then displayed on the display 95.

Alternatively, the mobile terminal 9 may directly access URL which lists information on weather forecast corresponding to the region from another WWW (World Wide Web) server that provides weather forecast.

Furthermore, for example, a database for recording URL's of programs corresponding to a region-date-channel number combination (all represented in Kana notation code) may have been built in the listed data providing server 12 as TV program information, such that the database can be searched for desired TV program information in response to a request from the user terminal 7 through a speech. More specifically, the listed data providing server 12 fetches program information for each region-date-channel number combination from WWW servers that provide TV program information, processes the fetched program information, and creates a list of URL's of programs for each region-date-channel number combination, all represented in Kana notation code, as the listed data. In response to a request for the list from the user terminal 7, the listed data providing server 12 transmits the listed data to the user terminal 7. The user terminal 7 fetches the listed data transmitted thereto from the listed data providing server 12. Here, the user utters a region, a date or a channel number of a program he wants to watch. When the uttered word coincides with some contents of the listed data, WWW servers providing the program information are accessed with URL's corresponding to the coincident item. In this way, information on a desired program is acquired on the user terminal 7.

In addition, the listed data providing server 12 may convert a recording code corresponding to a TV program to a Kana notation code represented by a speech, and transmit listed data including this code representative of the recording code to the user terminal 7, so as to cause a VTR connected to the user terminal 7 to set a timer recording based on the recording code. In other words, the user is required to only utter a recording code for a program he wants to record at the user terminal 7, causing the VTR connected to the user terminal 7 to automatically set timer recording based on the recording code.

Further, while in the embodiment illustrated in Fig. 5, the listed data providing server 12 transmits all listed data selected at the mobile terminal 9, the server 12 may transmit only data corresponding to a search keyword.

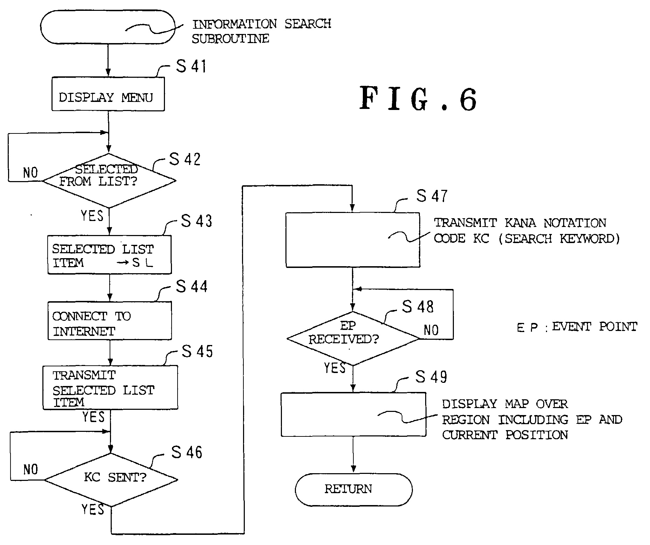

Fig. 6 is a flow chart illustrating another example of the information search subroutine which has been modified in view of the foregoing aspect.

Referring specifically to Fig. 6, the system controller 103 first supplies search menu screen information to the graphic driver 94 through the system bus 100 for displaying a search menu including a list of items such as movie theaters, amusement parks, restaurants, or local weather forecast (step S41). With the execution of step S41, the search menu is displayed on the screen of the display 95.

Next, the system controller 103 determines whether or not the user has selected an item from the list using the manipulation switch 98 or the speech input unit 99 (step S42). This determination is repeated until the user has selected an item from the list. When the user selects a desired item from the list on the displayed search menu using the manipulation switch 98 or the speech input unit 99, the system controller 103 once stores a selected list item SL indicative of the item thus selected from the list on the search menu in the RAM 102 (step S43).

Next, the system controller 103 supplies a connection instruction signal and a telephone number of the provider 6 to the transceiver 106 through the system bus 100 for connecting the Internet (step S44). With the execution of step S44, the transceiver 106 places a call to the provider 6, i.e., the destination of the telephone number, through wireless transmission to make a request for a connection to the Internet. Here, when a connection to the Internet is established, the system controller 103 supplies URL (Uniform Resource Locator) of the listed data providing server 12, and the selected list item SL to the transceiver 106 through the system bus 100 (step S45). With the execution of step S45, the provider 6 makes an access to the listed data providing server 12. In this event, the listed data providing server 12 reads listed data corresponding to the selected list item SL.

Next, the system controller 103 determines whether or not a Kana notation code KC has been sent from the speech input unit 99 (step S46). This determination is repeated until this Kana notation code KC has been sent. Here, when the user enters a search keyword through a speech using the microphone 105, the speech recognition circuit 104 sends a Kana notation code KC corresponding to the entered search keyword. For example, if the user utters "repletion of Rome" as the search keyword, the speech recognition circuit 104 sends a Kana notation code KC corresponding to "rohma no jujitsu" (repletion of Rome) onto the system bus 100.

Upon determining that the Kana notation code KC as mentioned has been sent onto the system bus 100, the system controller 103 transmits the Kana notation code KC as the search keyword to the listed data providing server 12 through the transceiver 106, the portable telephone station 8 and the provider 6 (step S47). Here, upon receipt of the Kana notation code KC, the listed data providing server 12 first extracts all item words having the same code as this Kana notation code KC from the listed data. Next, the listed data providing server 12 selects from positional information corresponding to the respective item words thus extracted, the nearest one from a current position of the vehicle as an event point EP, and transmits the selected event point EP to the mobile terminal 9 through the provider 6 and the portable telephone station 8.

The system controller 103 determines whether or not the event point EP has been received (step S48). This determination is repeated until the event point EP has been actually received. Upon determining at step S48 that the event point EP has been received, the system controller 103 supplies a drawing instruction to the navigation unit 93 for displaying an image of a map over a predetermined region including the event point EP, on which the event point EP is blinked (step S49). With the execution of step S49, the navigation unit 93 sends current running map data onto the system bus 100 for displaying the map over the predetermined region including the event point EP on which a point indicative of the current position of the vehicle is drawn. The graphic driver 94 converts the current running map data to image data which is supplied to the display 95. In this way, the display 95 displays on the screen an image of the map over the predetermined region which includes blinking indications of the current position of the vehicle and the position of, for example, the movie theater existing nearest from the current position.

As described above, in the embodiment illustrated in Fig. 6, the listed data is searched for desired positional information on the listed data providing server 12. Thus, data transmitted between the listed data providing server 12 and the mobile terminal 9 are only the event point EP and the Kana notation code KC, so that an access time required therefor can be reduced as compared with the embodiment illustrated in Fig. 5 which involves transmission of listed data.

In the information retrieval system according to the present invention as described above in detail, since a search keyword can be entered using the Kana notation code which eliminates the Kana-to-Kanji conversion, an information search can be conducted through simple manipulations.

## Claims

1. An information retrieval system comprising an information network, an information providing server connected to said information network for storing a plurality of item words and information data associated with each of said item words, and an information search terminal connected to said information network, wherein:
each of said item words includes a Kana notation code; and
said information retrieval system, responsive to a search keyword entered from said information search terminal in the form of said Kana notation code, searches the contents preserved in said information providing server for said item words having the same Kana notation code as said search keyword, and said information data associated with said item words, respectively.

2. An information retrieval system comprising an information network, an information providing server connected to said information network for storing a plurality of item words and information data associated with each of said item words, and an information search terminal connected to said information network, wherein:
each of said item words includes a Kana notation code;
said information providing server includes transmitting means for transmitting a plurality of said item words and information data associated with each of said item words to said information search terminal; and
said information search terminal includes storage means for storing said item words and information data transmitted thereto from said information providing server; input means for accepting entry of a search keyword in the form of said Kana notation code; and search means for searching the contents stored in said storage means for said item words having the same Kana notation code as said search keyword, and said information data associated with said item words, respectively.

3. An information retrieval system comprising an information network, an information providing server connected to said information network for storing a plurality of item words and information data associated with each of said item words, and an information search terminal connected to said information network, wherein:
each of said item words includes a Kana notation code;
said information search terminal includes input means for accepting entry of a search keyword in the form of said Kana notation code; and transmitting means for transmitting said search keyword to said information providing server; and
said information providing server includes search means for searching for said item words having the same Kana notation code as said search keyword transmitted thereto from said information search terminal, and said information data associated with said item words, respectively; and transmitting means for transmitting said item words and said information data searched by said search means to said information search terminal.

4. An information retrieval system according to claim 2, wherein said input means comprises speech input means including a microphone for transducing a speech based on said search keyword to an electrical signal to produce a speech signal, and speech recognition means for converting said speech signal to said Kana notation code.

5. An information retrieval system according to claim 3, wherein said input means comprises speech input means including a microphone for transducing a speech based on said search keyword to an electrical signal to produce a speech signal, and speech recognition means for converting said speech signal to said Kana notation code.

6. An information retrieval system according to claim 2, wherein said information search terminal includes:
a navigation unit for detecting a current position of a vehicle to display a map over a predetermined region including said current position; and
means for superimposing an image based on said information data created by said search on said displayed map.

7. An information retrieval system according to claim 3, wherein said information search terminal includes:
a navigation unit for detecting a current position of a vehicle to display a map over a predetermined region including said current position; and
means for superimposing an image based on said information data created by said search on said displayed map.
